# EUROPÄISCHE PATENTSCHRIFT

(11) **EP 1 513 390 B1**
(45) Veröffentlichungstag und Bekanntmachung des Hinweises auf die Patenterteilung: **14.02.2007**
(21) Anmeldenummer: 03743295.2
(22) Anmeldetag: 04.03.2003
(51) Int. Cl.: A01C 11/00, A01B 79/00

(54) **VORRICHTUNG UND VERFAHREN ZUM ANLEGEN VON REIHENPFLANZUNGEN**
DEVICE AND METHOD FOR ROW PLANTING
DISPOSITIF ET PROCEDE DE PLANTATION EN LIGNES

(30) Priorität: 05.03.2002 DE 10209440
(43) Veröffentlichungstag der Anmeldung: 16.03.2005
(73) Patentinhaber: Wagner, Jürgen, 67159 Friedelsheim (DE)
(72) Erfinder: Wagner, Jürgen, 67159 Friedelsheim (DE)
(74) Vertreter: Mutzbauer, Helmut
(86) Internationale Anmeldenummer: PCT/DE2003/000680
(87) Internationale Veröffentlichungsnummer: WO 2003/073833

(56) Entgegenhaltungen:
- DE-A- 3 922 061
- DE-A- 4 102 343
- US-A- 6 164 223
- US-B1- 6 167 819

## Beschreibung

Die Erfindung betrifft ein Verfahren und eine Vorrichtung (landwirtschaftliche Maschine) zum Anlegen von Reihen pflanzungen insbesondere im Obst- und Weinbau gemäß dem Oberbegriff der Ansprüche 1 und 8.

Vorrichtungen für das maschinelle Anlegen gärtnerischer oder bäuerlicher Kulturen aus Setzlingsmaterial sind bekannt. Der Grad der dabei erzielbaren Rationalisierung und Automatisierung hat sich mit der Zeit ständig erhöht.

Es sind bereits Maschinen zum Anbau an die Dreipunktanbauvorrichtung eines vorhandenen Ackerschleppers (Treckers) im Gebrauch, mit denen Weinberge angelegt werden können. Diese Maschinen sind so eingerichtet, dass die Setzlinge manuell oder selbsttätig in einen Förderapparat eingelegt werden, der sie fortlaufend mit gleichmäßigem Pflanzabstand in einen Graben einbringt, den die über das Land gezogene Maschine zuvor mittels einer an der Maschine befestigten keilförmigen Schar geöffnet hat und der unmittelbar nach dem Pflanzen durch Beischieben und Andrücken des Erdreichs wieder verschlossen wird.

Eine derartige Vorrichtung ist z.B. in der EP-A-340 446 beschrieben. Sie ist als Anbaugerät für einen Traktor gestaltet und weist einen Hauptrahmen auf, innerhalb dessen als Pflanzmechanismus eine Förderkette parallel zur Pflanzrichtung umläuft, die mit Greifern für die Setzlinge bestückt ist. Mittels der Förderkette werden die Greifer in geöffneter Stellung an einer Aufgabestation vorbeigeführt, wo sie einen manuell übergebenen Setzling aufnehmen, sich dann schließen und den Setzling abwärts in den Pflanzgraben bringen.

Eine andere Vorrichtung mit den Merkmalen des Oberbegriffes des Anspruchs 1 ist in der US-A-6 167 819 beschrieben.

Nach einem anderen, nicht druckschriftlich veröffentlichten Vorschlag ist eine solche Vorrichtung anstelle einer Förderkette mit einem Greiferrad ausgestattet, dessen Achse quer zur Fahrtrichtung der Vorrichtung angeordnet ist und das sich hinter und innerhalb der Schar dreht. Das Greiferrad besteht aus einem scheibenförmigen Träger, der auf seinem Umfang mehrere, radial angeordnete Hülsen trägt, in denen auswechselbare Greifer sitzen, die jeweils einen Setzling aufnehmen können und im Prinzip in der in der EP-A-340 446 beschriebenen Weise arbeiten. Diese Vorrichtung kann im Prinzip zugleich mit den Setzlingen auch Stützstäbe in den Boden einbringen.

Bei den mit den bekannten Vorrichtungen durchführbaren Arbeitsverfahren wird erreicht, dass die anzulegenden Pflanzreihen (z.B. Rebzeilen) geradlinig in vorgegebener Richtung verlaufen und untereinander vorgegebene Abstände einhalten. Innerhalb der Pflanzreihen weisen die Setzlinge gleichmäßige Abstände auf.

Es ist wünschenswert, wenn auch nicht immer erforderlich, dass die Setzlinge senkrecht in den Boden gelangen, auch wenn die Pflanzung in einer Hanglage stattfindet. Dies gilt vor allem für die Pflanzstäbe oder Stützpfähle, wenn solche gleichzeitig mit den Setzlingen ins Erdreich eingebracht werden. Auch wenn es sich bei dem Pflanzgut z.B. um Obstbäume handelt, ist es erforderlich, dass diese nach der Pflanzung senkrecht stehen.

Für das mechanisierte Pflanzen in Reihen (Zeilen) muss bisher das Gelände vor der Anlage einer ersten Zeile vermessen, Ort und Richtung der ersten Reihe festgelegt und bei einigen Vorrichtungen auch bepflanzt werden. Die nächsten Reihen werden vom Führer des Pflanzgeräts (Traktorfahrer) dann z.B. mittels einer Abstandslehre an der jeweils vorhergehenden Reihe orientiert. Bei einem anderen Verfahren folgt das Gerät einem Laserstrahl. Gleichmäßige Abstände der Setzlinge innerhalb einer Reihe werden dadurch erzielt, dass die Bewegung des Pflanzmechanismus, also des Greiferrads oder der Förderkette von einem von den Antriebsrädern unabhängigen Bewegungsmessgerät gesteuert wird, weil die Fortbewegung des Schleppers, der die Vorrichtung trägt, aufgrund des Durchdrehens der Antriebsräder im Ackerboden nur selten deren Umfangsgeschwindigkeit entspricht. Die Fahrgeschwindigkeit kann somit nicht aus der Drehbewegung der Antriebsräder des Schleppfahrzeugs ermittelt werden.

Zur Messung der Fortbewegung der Maschine über das Gelände wurden bereits verschiedene Methoden vorgeschlagen, die z.B. auf der Verwendung von Infrarotsendern, Lasermodulen und Ultraschall beruhen. Bewährt haben sich bisher aber nur rein mechanisch arbeitende sog. Führungsdrahtgeräte. Als Messeinrichtung dient dabei ein Stahldraht, der am Anfang der Pflanzreihe an einem Anker befestigt wird und, während er sich über ein Messrad von einer auf der Pflanzmaschine angeordneten Vorratsrolle abwickelt, nach hydraulischer Verstärkung der Drehgeschwindigkeit des Messrads durch einen Drehmomentwandler unmittelbar die Drehgeschwindigkeit der Pflanzvorrichtung steuert.

Die bekannten Maschinen haben noch Nachteile:
- Die anzulegende Fläche muss im Prinzip rechteckig sein, da Änderungen der Reihenabstände entlang einer Pflanzreihe (z.B. ein fächerförmiger Verlauf der Pflanzreihen bei Flächen, die nicht-parallele Begrenzungen aufweisen) oder gar Bepflanzung entlang einer gekrümmten Kontur, wie sie z.B. bei den im Weinbau üblichen, stark geneigten Hanglagen durchaus vorkommt, bisher praktisch unmöglich ist;
- die Pflanzrichtung kann praktisch nicht gewechselt werden - das relativ schwerfällige Gerät muss nach jeder Zeile eine Leerfahrt machen, was in vielen Fällen an räumliche Grenzen stößt, z.B. weil das benachbarte Gelände bereits bepflanzt ist;
- die anzulegende Fläche muss vor Arbeitsbeginn vermessen und am Feldrand eine Querlinie rechtwinklig zur ersten Pflanzreihe festgelegt werden; bei einer vom Rechteck abweichenden Form der Fläche muss evt. eine Teilfläche mit kürzeren Reihen, gegebenenfalls sogar von Hand bepflanzt werden, um die zur Verfügung stehende Fläche voll auszunutzen. Hindernisse im Feld (Strommasten, Bäume, Felsen etc.) und vor allem die im Weinbau häufigen Hanglagen stören die Durchführung der Pflanzung erheblich. Auch wenn ein Laserstrahl als Führungslinie zur Erzielung gerader Pflanzungsverläufe verwendet wird, muss das Lasergerät bei jeder Pflanzreihe umgesetzt werden;
- wenn ein Führungsdrahtgerät eingesetzt wird, muss der Führungsdraht nach jeder Pflanzreihe gegebenenfalls gereinigt und wieder aufgerollt, die Pflanzmaschine in die Ausgangsposition zurückgefahren, die Verankerung für den Führungsdraht neu eingetrieben und der Führungsdraht wieder eingehängt werden;
- bei Änderungen des Pflanzabstands muss das Getriebe der Maschine umgebaut, d.h. durch Auswechseln von Zahnrädern das Übersetzungsverhältnis verändert werden. Die Pflanzabstände können dabei nicht stufenlos, d.h. beliebig gewählt werden, sodass nicht immer die bestmögliche Ausnutzung eines gegebenen Geländes erreicht werden kann.

Es ist bekannt, dass mit Hilfe der sog. Satelliten-Navigation durch Auswertung der von mehreren Satelliten des GPS (global positioning system) gleichzeitig empfangenen Signale horizontale Ortsbestimmungen überall auf der Erdoberfläche mit einer Genauigkeit im Meterbereich möglich sind. Dies hat z.B. zur Entwicklung von Sämaschinen geführt, mit denen das gesteuerte Ausbringen von Saatgut auf einer bestimmten Fläche möglich ist, vgl. US-A-6 167 819. Die inzwischen durch direkte Signalverarbeitung erzielbare Genauigkeit, günstigenfalls einige Dezimeter, reicht aber für die Bedürfnisse einer Pflanzmaschine nicht aus, die mit einer wesentlich höheren Genauigkeit (± 1 cm) arbeiten muss. Allerdings kann die Genauigkeit der Bestimmung des Orts und damit auch der Geschwindigkeit im Prinzip mit der sog. Differentialmethode, d.h. durch den Vergleich der Ortskoordinaten eines beweglichen Empfängers mit dem gleichzeitig gewonnenen Mess-Ergebnis eines ortsfesten Referenzempfängers wesentlich verbessert werden. Es sind Geräte im Handel, mit denen diese genauere Ortsbestimmung möglich ist und es sind auch weiterführende Entwicklungen von Satellitensystemen im Gange, die möglicherweise ohne Referenzempfänger auskommen.

Es ist eine Aufgabe der Erfindung, eine Vorrichtung zu schaffen, mit deren Hilfe auch im Wendeverfahren geradlinige oder gekrümmte Pflanzreihen angelegt werden können, innerhalb derer die Setzlinge gleichmäßige Abstände einhalten, wahlweise im Geviert, versetzt oder in einem beliebigen sonstigen Raster gepflanzt werden können, und auch in Hanglagen sicherzustellen, dass die Pflanzreihen untereinander gleiche oder jedenfalls definierte Abstände aufweisen.

Es ist eine erweiterte Aufgabe der Erfindung, Maßnahmen anzugeben, mittels derer die Positionsbestimmung beim Einsatz des GPS-Ortungsverfahrens in Pflanzmaschinen so verbessert werden kann, dass die erzielte Genauigkeit für die maschinelle Anlage von Reihenpflanzungen auch bei ungleichförmigen Geschwindigkeiten von 5 bis 10 km/h ausreicht. Eine ebenfalls angestrebte Leistung der Erfindung ist die Speicherung der bei der Pflanzung erzielten Pflanzenverteilung (d.h. der Ortskoordinaten jeder einzelnen Pflanze) in einem der Datenverarbeitung zugänglichen Speichermedium wie z.B. einer Diskette.

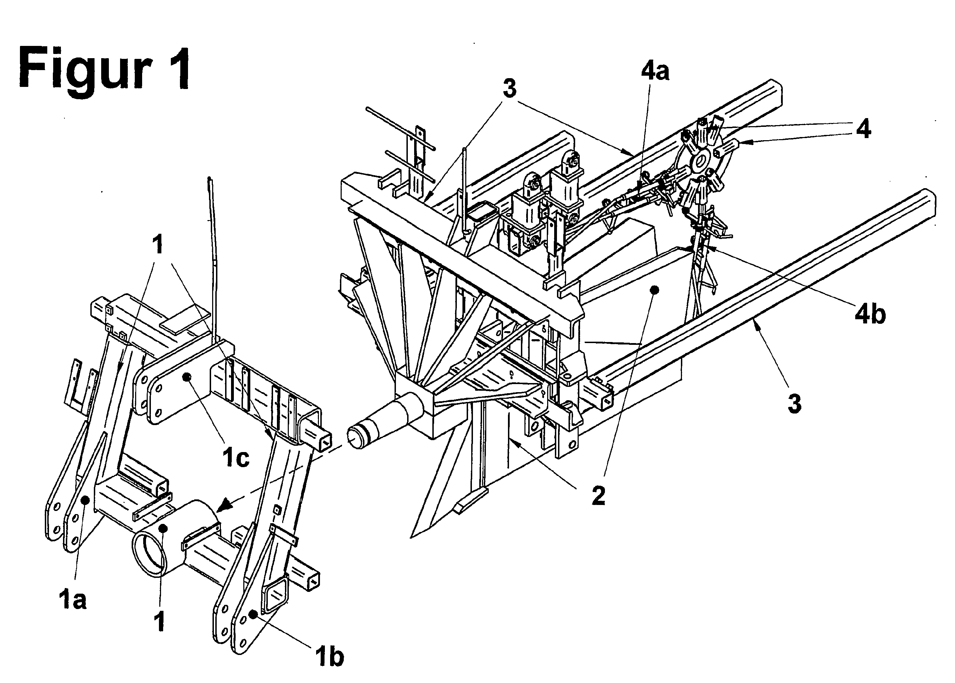

Die Erfindung betrifft (vgl. Fig. 1) eine selbstfahrende oder zum Anbau an die Dreipunkt-Kupplung eines Ackerschleppers mittels eines Anbaurahmens (1) geeignete Vorrichtung zum Anlegen von Reihenpflanzungen, mit einem Hauptrahmen (3), der vorzugsweise mit einer Einrichtung zum Neigungsausgleich ausgestattet ist, mindestens einer nach hinten offenen, keilförmigen Schar (2) zum Ausheben eines Pflanzgrabens, die fest mit dem Anbaurahmen (1) oder dem Hauptrahmen (3) verbunden oder so angeordnet ist, dass sie abgesenkt werden kann, wobei die Vorrichtung mindestens aufweist:
- eine innerhalb des Hauptrahmens (3) angeordnete mechanische Pflanzvorrichtung (z.B. 4, 4a, 4b) zur Einbringung von Setzlingen in den Pflanzgraben,
- übliche Elemente wie Sitze für das Bedienungspersonal, Vorratskrippen zur Aufnahme des Pflanzguts, Mittel zum Antrieb und zur Anpassung der Arbeitsgeschwindigkeit der Pflanzvorrichtung an die tatsächliche Fortbewegungsgeschwindigkeit der Vorrichtung auf der Ackerfläche, sowie Mittel zum Wiederverschließen des Pflanzgrabens.

Eine als Basis für die Verwendung der Erfindung besonders bevorzugte Vorrichtung weist erfindungsgemäß ein um eine Achse quer zur Fortbewegungsrichtung geschwindigkeitsgesteuert drehbares, in die Schar teilweise eintauchendes Pflanz- oder Greiferrad (4) auf, das auf seinem Umfang in radialer Richtung mehrere, in Aufnahmehülsen sitzende, sternförmig angeordnete Greifer oder Greiferpaare (4a, 4b,.....) trägt, die drehwinkelabhängig in eine Offen- und eine Schließstellung gebracht werden können, nämlich mindestens einen Greifer für Pflanzgut (Pflanzengreifer) und wahlweise einen zugeordneten Greifer für Pflanzpfähle oder Pflanzstäbe (Pfahlgreifer), für das gleichzeitige Einbringen von Pflanzgut und Pfahl bzw. Stab, wobei die Greifer bzw. Greiferpaare vorzugsweise auswechselbar auf einem gegebenenfalls gemeinsamen Holm angeordnet sind.

Andere Lösungen des Problems, Pflanzgut maschinell in eine vorbereitete Pflanzfurche einzubringen, z.B. über eine Förderkette, die die Greifer trägt, können ebenfalls mit den Mitteln der Erfindung in der vorstehend erwähnten Weise ausgerüstet und verbessert werden.

Die Erfindung löst unter anderem die vorstehenden Aufgaben, nach einmaliger Vorgabe der Pflanzrichtung auch im Wendeverfahren geradlinige oder gekrümmte Pflanzreihen anzulegen, innerhalb derer die Setzlinge gleichmäßige Abstände einhalten und auch in Hanglagen sicherzustellen, dass die Pflanzreiben untereinander gleiche oder jedenfalls definierte Abstände aufweisen durch die Merkmale des kennzeichnenden Teil der Ansprüche 1 und 8.

Eine zum Anbau an die Dreipunkt-Kupplung eines Ackerschleppers mittels eines Anbaurahmens geeignete Vorrichtung zum Anlegen von Reihenpflanzungen ist bereits bekannt. Bekannt sind insbesondere Vorrichtungen (vgl. EP-A-340 446), die eine zentrale, nach hinten offene, keilförmige Schar (2), aufweisen, die fest mit einem Anbaurahmen (1) oder einem Hauptrahmen (3) verbunden ist. Wenn die an diesen Vorrichtungen vorhandene Schar beim Straßentransport den Boden nicht berühren darf, wird sie mittels der am Schlepper vorhandenen Hydraulik angehoben. Sie kann aber auch so angeordnet sein, dass sie unabhängig vom Anbau- bzw. Hauptrahmen abgesenkt werden kann, z.B. mittels höhenverstellbarer Stützrollen. Bisher ist allerdings der Hauptrahmen mit dem Anbaurahmen starr verbunden, sodass beim Befahren hängigen Geländes der Hauptrahmen aus der Wagerechten gekippt wird. Es sind i.d.R. lediglich Mittel vorhanden, mit denen der Hauptrahmen seitlich gegenüber der Fahrzeugachse ausgelenkt werden kann, um kurze Abweichungen der Fahrzeugspur von der vorgesehenen Achse einer Pflanzreihe auszugleichen. Nach mehreren nicht vorveröffentlichten Vorschlägen kann die Maschine mit Mitteln versehen werden, die es gestatten, den Hauptrahmen (3) auch dann waagerecht zu halten, wenn die Maschine als Ganzes während der Fahrt über hängiges Gelände geneigt wird. Z.B. kann der Hauptrahmen (3) mit dem Anbaurahmen (1) (bzw. bei einem selbstfahrenden Fahrzeug: dessen Tragwerk) um eine Längsachse drehgelenkig verbunden sein, wie dies in der Figur 1 dargestellt ist. Nach einem weiteren, nicht vorveröffentlichten Vorschlag kann der Hauptrahmen dadurch waagerecht gehalten werden, dass er sich unabhängig oder gemeinsam mit dem Anbaurahmen gegenüber den unteren Auslegern der Dreipunktaufhängung des Schleppfahrzeugs abstützt und dadurch höhenverstellbar ist, dass er einseitig angehoben bzw. abgesenkt werden kann, sodass im Ergebnis der Hauptrahmen auch bei einer Fahrt über hängiges Gelände stets in waagerechter Lage bleibt. Die Einhaltung der waagerechten Ausrichtung des Hauptrahmens und damit die Sicherung einer stets senkrechten Pflanzung, auch in geneigtem Gelände, mittels einer sensorgesteuerten Hydraulik ist für die Benutzung der Erfindung von Vorteil, jedoch nicht grundsätzlich erforderlich.

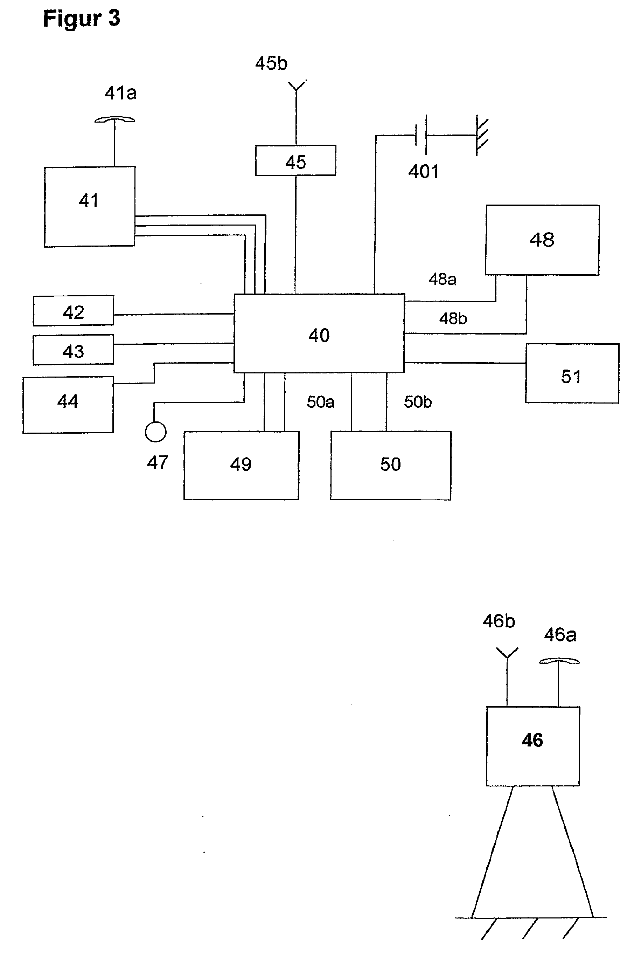

Die bevorzugte Einrichtung zur erfindungsgemäßen Satellitensteuerung der Pflanzmaschine kann dem als Figur 3 beigefügten Blockschema entnommen werden, das die folgenden, an sich bekannten und erfindungsfunktionell anzupassenden Bauelemente oder Module schematisch darstellt und von einem Fachmann für rechnergesteuerte Anwendungen ohne weiteres praktisch umgesetzt werden kann:

Eine von der vorhandenen Bordstromversorgung (Batterie 401) mit Spannung versorgte zentrale Steuereinheit (40) mit Eingängen bzw. Schnittstellen für
- die Signale eines mitgeführten, mit einer Satellitenempfangsantenne (41a) ausgestatteten Satellitenempfängers (41);
- das vom Empfänger (45) empfangene und verarbeitete Funksignal einer stationären Referenzstation (46), die eine Satellitenantenne (46a) sowie eine Funkantenne (46b) zur Kommunikation mit dem mobilen Empfänger (45) aufweist;
- die Steuerung der Drehbewegung des Pflanzrads (49);
- den Informationsverkehr (Schnittstellen 48a, 48b) zwischen Steuereinheit, Bedienungsterminal und Monitor im Blickfeld der Bedienungsperson;
- vorzugsweise Sensoren (42, 43) für die Ermittlung der Quer- und Längsneigung der Hochachse der Maschine gegenüber der Lotrechten;
- vorzugsweise einen satellitenunabhängigen Bewegungsmelder oder Sensor (Modul 44) für den momentanen Bewegungsvektor der Maschine;
- vorzugsweise eine Not-Aus-Steuerung (47).

Es versteht sich, dass die zentrale Steuereinheit (40) auch ortsfest montiert sein kann (z.B. zusammengebaut mit dem ortsfesten Referenzempfänger) und deren (in der Regel digital verfügbare) Informationen der erfindungsgemäßen Pflanzmaschine auch auf drahtlosem Weg übermittelt werden können, unter sinngemäßer Abwandlung der vorstehend dargestellten Schnittstellen-Abhängigkeiten. Es versteht sich weiter, dass das Vorhandensein eines ortsfesten Referenzempfängers dem gegenwärtigen Stand der Technik bei satellitengesteuerter Ortsbestimmung entspricht. Die Erfindung ist nicht auf diesen gegenwärtigen Stand der Technik beschränkt, sondern auch auf künftige Entwicklungen der satellitengesteuerten Ortsbestimmung anwendbar.

Zur Funktion des Moduls (44) ist folgendes zu bemerken: Es ist bekannt, dass zur genauen Ortsbestimmung mittels des gegenwärtig verfügbaren GPS und damit zum exakten Arbeiten einer darauf gegründeten Pflanzmaschine gleichzeitig mehrere, im Allgemeinen mindestens 3, zweckmäßig jedoch 4 oder mehr Satelliten empfangen werden müssen. Zwar ist diese Voraussetzung im freien Gelände im Allgemeinen gegeben, jedoch sollte der Fahrer ein Warnsignal erhalten, wenn zu wenig Information vorhanden ist, damit er die Arbeit gegebenenfalls unterbricht, bis wieder genügend Satelliten empfangen werden. Es kann aber auch die Möglichkeit vorgesehen werden, dass die Maschine zeitweilig ohne Satellitensteuerung weiterbetrieben werden kann, z.B. durch ausschließliche Auswertung des Signals eines bordeigenen, von der Satellitensteuerung unabhängigen Geschwindigkeitsmessgeräts oder Moduls (44).

Eine weitere Aufgabe dieses Moduls (44) ergibt sich aus der folgenden Überlegung: Die Auswertung von Positionssignalen aus der gegenwärtig verfügbaren Satelliten-Navigation ist unsicher, wenn sie zur Ortsbestimmung schnellfahrender, mit ungleichförmiger Geschwindigkeit bewegter Vorrichtungen dienen soll, wie dies bei ackergängigen Maschinen häufig ist, da die Auswertung von GPS-Satellitensignalen grundsätzlich nicht kontinuierlich geschieht, sondern in Intervallen. Schnell bedeutet dabei bereits eine Geschwindigkeit von z.B. 5 bis 10 km/h. Die Wiederholungsrate liegt bei gängigen GPS-Empfängern im Bereich von 1 bis 2 Hz, was bei der genannten Geschwindigkeit einer Wegstrecke von etwa 1,5 bis 3 Metern zwischen zwei Messungen entspricht. Dies gilt auch für Positionsbestimmungen mit der Differentiaimethode. Um bei ungleichförmiger Geschwindigkeit eine Ortsbestimmung mit einer Genauigkeit von ± 1 cm zu erzielen, müsste die Wiederholungsrate in der Größenordnung von 100 bis 200 Hz liegen. Derartige Geräte sind jedoch erheblich teurer oder derzeit nicht verfügbar. Nach der Erfindung ist daher eine Einrichtung, eben in Gestalt des erwähnten Moduls (44), vorhanden, mit der die Fahrgeschwindigkeit kontinuierlich gemessen und im Intervallbereich zwischen zwei Signalen des Satelliten als maßgeblich betrachtet wird. Zur Gewinnung eines von der Satellitensteuerung unabhängigen Geschwindigkeits-Signals eignet sich bevorzugt ein über den Boden bewegtes Messrad mit Bodenkontakt und einem üblichen Drehzahlgeber, wie er z.B. im Automobilbau beim bekannten Antiblockiersystem üblich ist. Es kann aber auch ein anderer Geschwindigkeitsmesser eingesetzt werden, der von der Umdrehung der Antriebsräder der Pflanzmaschine unabhängig ist, z.B. ein Laser- oder ein Infrarotgerät, gegebenenfalls nach entsprechender Dämpfung (Zeitkonstante), um die Oberflächenrauhigkeit des Bodens auszuschalten. Geeignete Geräte sind handelsüblich und werden für berührungslose Messungen in der Technik vielfach eingesetzt. Auf diese Weise können die kurzfristigen Schwankungen der Fahrgeschwindigkeit der Pflanzmaschine zwischen zwei Satellitenmessungen ermittelt und der Pflanzgeschwindigkeit aufgeschaltet werden. Natürlich kann auch die Ausrüstung der erfindungsgemäßen Pflanzmaschine mit der bewährten Steuerung durch einen abrollbaren Messdraht beibehalten werden, deren Signale im Intervallbereich zwischen zwei auswertbaren Satellitenmessunge verarbeitet werden. Alternativ kann bei nicht allzu großen Ansprüchen an die Pflanzgenauigkeit, evt. auch auf Böden, die eine gleichmäßigere Bewegung der Pflanzmaschine gestatten, die aus zwei oder mehr vorausgehenden Satellitenmessungen gewonnene mittlere Geschwindigkeit als maßgebliche Geschwindigkeit der Msschine zwischen zwei Satellitenmessungen verwendet werden. Zweckmäßig wird das vom Modul (44) gelieferte oder durch Mittelung aus früheren Messungen gewonnene Geschwindigkeitssignal bei jedem nächsten Signal des Satelliten-Ortungssystems auf Null gesetzt, d.h. die Gesamtstreckenmessung bzw. Bestimmung des Pflanzorts, die logischerweise mit der Anwendung der Erfindung verbunden ist, wird ausschließlich auf die Auswertung von Satellitensignalen gegründet.

Das zentrale Steuergerät 40 kann weitere Schnittstellen für weitere Signale aufweisen, z.B. die Eingabe einer beliebigen, nicht-geraden Konturlinie, die z.B. durch erstmaliges Befahren des Randes eines Felds gewonnen wird, das entlang einer Hanglinie angelegt werden soll, wonach alle weiteren Pflanzreihen parallel dazu bestimmt werden. Eine weitere Schnittstelle kann auch zu einem Speicher (51) vorgesehen werden, der Ortskoordinaten bzw. die relative Zuordnung sämtlicher innerhalb eines Arbeitscyclus gesetzter Pflanzen festhält, sowohl zur Dokumentation wie auch zur späteren Steuerung von Arbeitsmaschinen, mit denen eine automatisierte Bearbeitung des bepflanzten Geländes (Felds) vorgenommen werden soll. Wenn diese Information auf einem geeigneten Datenträgers (z.B. einer Diskette oder vergleichbarer Datenspeicher) festgehalten wird, lassen sich auch derzeit noch nicht verfügbare Maschinen für die Bearbeitung von Pflanzungen schaffen, mit denen eine automatisierte Feldpflege möglich ist, z.B. Querhacken mit einer Antriebsgenauigkeit im Zentimeterbereich, mit denen die Bodenbearbeitung innerhalb einer Pflanzreihe, d.h. zwischen den Pflanzen automatisiert werden kann.

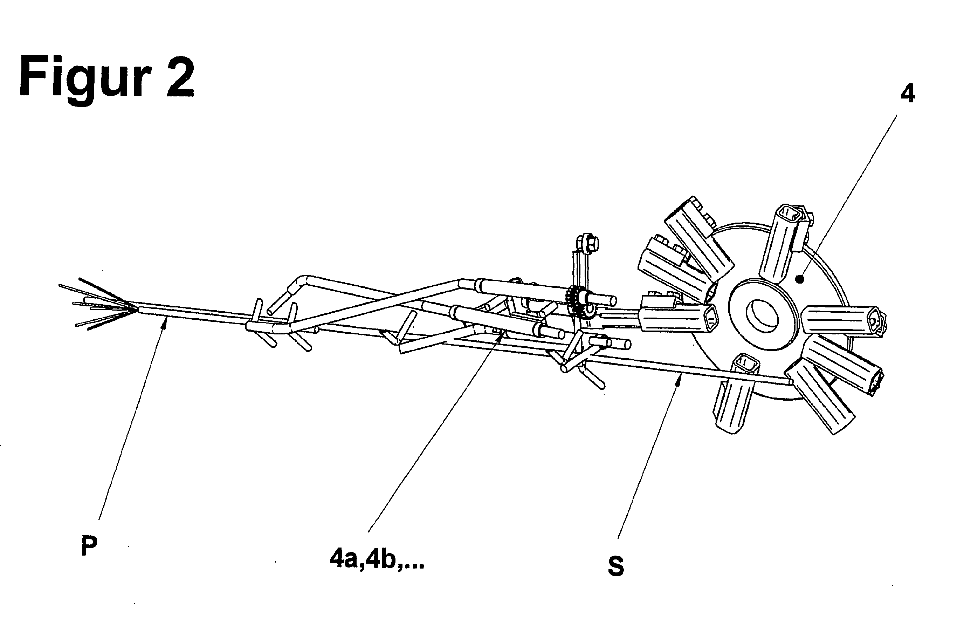

Um die Stelle, an der die Pflanzung eines bestimmten Setzlings erfolgen soll, möglichst genau bestimmen zu können, wird der Antrieb der Greifermechanik vorteilhaft mit ungleichförminger Drehgeschwindigkeit betrieben, derart, dass zu einer gegebenen Zeit vor dem Erreichen des Pflanzpunkts die Mechanik gestartet und beim Erreichen des Pflanzpunkts die Greifer geöffnet werden. Das Öffnen der Greifer geschieht zweckmäßig mechanisch, indem die Steuerhebel der Greiferelemente (vgl. Fig. 2) an Auslenkschienen vorbeigeführt werden, die auf dem Hauptrahmen oder um den Drehpunkt des Greiferrads herum an geeigneter Stelle angebracht sind. Diese Auslenkschienen können um den Drehpunkt des Greiferrads gegenüber einem Bezugspunkt an der Gesamtvorrichtung verstellbar angeordnet sein, sodass der Pflanzpunkt durch Veränderung des Winkels, den die Schienen z.B. mit der Lotrechten bilden, veränderbar ist. Die Steuerung des Öffnens und Schließens der Greifer selbst ist bekannt und nicht Gegenstand der Erfindung.

Zusätzlich sollten die Abweichungen berücksichtigt werden, die sich dadurch ergeben, dass die erfindungsgemäße Vorrichtung in nicht-ebenem Gelände eingesetzt wird. In diesem Falle kommt es zu Seitenneigung oder Längsneigung des Fahrzeugs d.h. Abweichungen des Hauptrahmens von der Wagerechten, was den jeweiligen Pflanzpunkt beeinflusst, wie man leicht erkennt. Diese Abweichungen werden mit jeweils einem der am Gerät angebrachten Sensoren (42, 43) für jede Ebene festgestellt, nämlich einmal in der Längsebene (d.h. zur Feststellung einer Steigung bzw. Längsneigung) und zum anderen in der Querebene (d.h. zur Feststellung einer Seitenneigung). Es können für jede Ebene getrennte Sensoren, aber auch Vorrichtungen verwendet werden, die gleichzeitig für beide Ebenen Signale erzeugen.

Wenn der Hauptrahmen der Maschine mit der Anbauvorrichtung um die Längsachse drehgelenkig verbunden oder sonst mit Mitteln zur waagerechten Ausrichtung ausgestattet ist, kann bei Pflanzungen mit seitlicher Neigung der Maschine (Längsfahrt in Hanglage) über die zentrale Steuerung der Maschine der Hauptrahmen waagerecht gehalten werden. Hierzu wird die von einem der Sensoren (42, 43) festgestellte Seitenneigung der Vorrichtung ausgeglichen; die zentrale Steuerung sollte zu diesem Zweck weiterhin mit mindestens einer Schnittstelle (50a) ausgestattet sein. Um die Seitenneigung der Maschine auszugleichen, werden die mit dem Sensor gewonnenen Signale zur Steuerung eines Servomotors verwendet, mit dem der Hauptrahmen gegenüber der Anbauvorrichtung horizontal ausgerichtet werden kann. Als Servomotore werden für den Betrieb der Vorrichtung in der Regel überall hydraulische Stellglieder verwendet, die von der üblichen zentralen Fahrzeughydraulik angetrieben werden. Anstelle hydraulischer Stellmotore können natürlich auch alle vergleichbaren elektrischen Stellantriebe eingesetzt werden, ohne dass der Bereich der Erfindung verlassen wird. Die Erfindung ist in ihrer Anwendung insbesondere nicht auf die vorstehend beschriebene Konstruktion zum Ausgleich einer Seitenneigung der Pflanzmaschine beschränkt sondern auf jede Pflanzmaschine anwendbar.

Um zu verhindern, dass die Pflanzung bei seitlicher Schwenkung des Hauptrahmens von der Pflanzlinie abweicht und sich der Arbeitspunkt der Pflanzeinrichtung, d.h. der vorgesehene Pflanzort des Setzlings seitlich verschiebt, sind weitere Steuerungsmaßnahmen erforderlich. Es sind daher bevorzugt Mittel vorgesehen (Schnittstelle 50b zu einer entsprechenden Hydraulik), mit denen (auch kurzfristige) seitliche Abweichungen von der Pflanzlinie durch eine begrenzte, i.d.R. hydraulisch betätigte seitliche Auslenkung des Hauptrahmens oder der gesamten Pflanzeinrichtung auf einem Schlitten gegenüber der Fahrzeuglängsachse ausgeglichen werden kann, ohne jedesmaliges Eingreifen des Fahrzeugführers. Es ist aber zweckmäßig, dabei auch eine Anzeigekorrektur des Kursabweichungs-Anzeigegeräts vorzusehen, damit die Pflanzmaschine stets innerhalb des (begrenzten) Verstellbereichs der seitlichen Auslenkung gehalten werden kann. Z.B. sollte sie in seitlich geneigtem Gelände vom Fahrer stets oberhalb der Pflanzlinie gehalten werden. Daher weist die erfindungsgemäße Steuerung in Form eines der Sensoren (42, 43) eine Möglichkeit auf, die - z.B. bei Fahrten quer zum Hang- die jeweilige Abweichung der Hochachse der Vorrichtung von der lotrechten Richtung festzustellen und über die Schnittstelle ein Signal zu liefern, mit dem die erforderlichen Korrekturen des Bahnverlaufs der Vorrichtung angezeigt bzw. durch Nachführen vorgenommen werden können.

Eine eigene (weitere) Steuerung (50b) kann vorgesehen werden, mit der der Einfluss einer Längsneigung der Maschine bei Fahrten hangaufwärts bzw. hangabwärts ausgeglichen werden kann. Dies geschieht zweckmäßig dadurch, dass rechnerisch die Verzögerung oder Beschleunigung ermittelt wird, mit der ein bestimmter Pflanzvorgang vorgenommen werden muß, damit die vorgesehenen Pflanzabstände auch in geneigtem Gelände stimmen, d.h. konstant gehalten werden. Abweichungen von der Horizontalen werden bei der erfindungsgemäßen Ausführungsform einer Maschine mit einem greiferbestückten Pflanzrad (4, 4a, 4b) dadurch ausgeglichen, dass der Drehwinkel des Pflanzrads, bei dem die Freigabe des Pflanzguts erfolgt, gegenüber der lotrechten Richtung unabhängig von der Längsneigung der Vorrichtung konstant bleibt. Die Drehbewegung des Pflanzrads kann somit gegenüber bei einer Änderung der Längsneigung solange verzögert oder beschleunigt werden, bis der Drehwinkel des Pflanzrads, bei dem die Freigabe des Pflanzguts erfolgt, gegenüber der lotrechten Richtung den vorgegebenen Wert erreicht.

Auf diese Weise wird erreicht, dass die Setzlinge (wie z.B. Obstbäume, Olivenbäume und dergl.) nicht nur an einer genau definierten Stelle, sondern darüber hinaus auch unabhängig von der Hangneigung senkrecht in den Boden gelangen.

Dies sei an folgendem Beispiel veranschaulicht: Angenommen, die Pflanzung soll quer zum Hang vorgenommen werden und der Hang weise eine Steigung nach links auf; die Pflanzmaschine wird sich nach rechts neigen. Die Querneigung des Hauptrahmens wird über den Sensor ermittelt und solange verstellt, bis sich der Sensor und damit der Hauptrahmen wieder in senkrechter Lage befindet. Die Pflanzung geschähe nun, wenn die Spur des Pflanzgeräts beibehalten würde, in Talrichtung gegen die Pflanzlinie versetzt. Um dies zu vermeiden, muss das gesamte Pflanzgerät entsprechend höher am Hang, d.h. links von der Pflanzlinie gefahren werden. Dies geschieht durch Aufschaltung eines entsprechenden Signals auf den Monitor, der, im Prinzip wie das Kursanzeigegerät eines Flugzeugs oder Schiffes, solange eine Änderung der Fahrtrichtung verlangt, bis die richtige Position der Vorrichtung erreicht ist.

Zum anderen sei angenommen, dass in der Pflanzlinie ansteigendes oder fallendes, hügeliges Gelände bepflanzt werden soll. Die Neigung der Pflanzlinie schwankt dabei häufig. Erfindungsgemäß kann eine Korrektur auch stattfinden, wenn die Maschine in einem solchen Gelände arbeitet, das in Arbeitsrichtung unregelmäßig ansteigt oder fällt. Um dies auszugleichen, müssen die Pflanzabstände so korrigiert werden, dass ihre Projektion auf die Grundfläche konstant ist. In diesem Fall ist der Bezugspunkt bei einer Fördereinrichtung, die aus einem Greiferrad besteht, dessen Drehpunkt. Über den Radius der Pflanzengreifer und den Neigungswinkel des Geländes gegenüber der Senkrechten kann das Maß für die Längenkorrektur bestimmt werden. Hierzu sind Steuerungsmittel vorzusehen, mit denen der Freigabepunkt für das Pflanzgut aus der Fördereinrichtung gegenüber dem Pflanzen in ebenem Gelände vor- oder zurückverlegt werden kann. Es ist vorteilhaft, den Durchmesser des Greiferrads als Parameter über eine Tastatur in das Steuergerät einzugeben. Da derartige Steuerungen zum Stand der Technik gehören, wird auf die Einzelheiten nicht eingegangen.

Natürlich können in der Praxis beide Neigungen gleichzeitig vorkommen; die erfindungsgemäße Vorrichtung ist, da die Neigungskorrektur in beiden Richtungen unabhängig geschieht, in der Lage, beide Einflussgrößen zu berücksichtigen und in jedem Falle eine einwandfrei gerade Pflanzung in gleichmäßigem Abstand sicherzustellen.

Zur konkreten Ausgestaltung der erfindungsgemäßen Vorrichtung mit den fachüblichen handwerklichen Mitteln kann folgendes gesagt werden:
- Satellitenempfänger und Referenzempfänger mit Ausgängen für Rechner und Verarbeitungsmöglichkeit für Signale des Referenzempfängers und gegebenenfalls Positionsanzeige auf einem Monitor sind handelsübliche Geräte, für die eine weitere Beschreibung sich erübrigt.
- Zum Einsatz der erfindungsgemäßen Satellitensteuerung erforderliche Datenverarbeitungsprogramme sind handelsübliche Software, die bei Bedarf den zusätzlichen Erfordernissen für bevorzugte Ausführungsformen der Erfindung mit handwerklichen Mitteln angepasst werden kann, ohne dass hierfür erfinderische Schritte erforderlich sind.
- Alle erfindungsgemäßen Merkmale können vom Fachmann in konkrete Ausführungsformen umgesetzt werden, ohne dass einerseits der Rahmen der Erfindung verlassen wird und andererseits Informationen erforderlich sind, die im Rahmens der vorliegenden Beschreibung nicht mitgeteilt werden. Natürlich sind im Rahmen der Erfindung mit den fachmännischen Kenntnissen und Mitteln in vieler Hinsicht Abwandlungen möglich.
- Alle Bauelemente sollten die äußeren Bedingungen berücksichtigen, unter denen solche Vorrichtungen erfahrungsgemäß betrieben werden. Beispielsweise muß die Gestaltung des Bedienungsgeräts darauf Rücksicht nehmen, dass die Anzeige auch bei starker Sonneneinstrahlung erkennbar bleibt und muß auch so gestaltet werden, dass sie den rauen Bedingungen standhält, wie sie üblicherweise in der Landwirtschaft herrschen.
- Die gesamte Steuerungselektronik einschließlich Satellitenempfänger (ohne die außerhalb anzuordnende Antenne) und Kommunikationsempfänger zum stationären Referenzgerät können in einem Gehäuse zusammen mit einer Eingabemöglichkeit (Tastatur) und einer Anzeigemöglichkeit (Display; Monitor; Kursanzeiger) im Blickfeld der Bedienungsperson zusammengefasst sein und genügend Ein- und Ausgänge enthalten. Die meisten der oben erwähnten Schnittstellen und Datenleitungen können daher in der aus der Datenverarbeitung bekannten oder dort üblichen Weise innerhalb eines Geräts angeordnet bzw. definiert werden. Das Bedienungsterminal (48) sollte zur Eingabe aller Parameter eingerichtet sein, die über die Schnittstelle 48b an das zentrale Steuergerät übertragen werden sollen, wie z.B. der Pflanzabstand.

Zum praktischen Betrieb der erfindungsgemäßen Vorrichtung ist zu bemerken: Die Richtung der ersten Pflanzreihe sollte durch Anfahren der Mitte der Pflanzreihe am Feldanfang und -ende jeweils eingegeben werden können. In Verbindung mit dem vom Fahrer gewählten Pflanzabstand und Reihenabstand sollte die Steuerung dann fähig sein, alle erforderlichen Parameter des Pflanzfelds als Information zu speichern. Die Position der ersten Pflanze in der Reihe wird vorgegeben (Bezugspunkt) und markiert den Ausgangspunkt für das vorgesehene Raster aus Pflanzabstand und Reihenabstand. Es sollten je nach den landschaftlichen Gepflogenheiten Raster möglich sein, bei denen Pflanzen im Geviert stehen, ebenso wie Raster mit jeweils um einen halben Pflanzenabstand versetzten Reihen. Die Übertragung auf das Steuergerät kann entweder dadurch erfolgen, dass das gesamte Gerät vor Pflanzbeginn zum Bezugspunkt gebracht und der Kursanzeiger dort auf Null gesetzt wird oder seine Empfangsantenne wird abnehmbar angeordnet, sodass sie zum Bezugspunkt gebracht, der Kursanzeiger dann auf Null gestellt und die Antenne wieder am Pflanzgerät befestigt wird. In diesem Fall erhält der Geräteführer vom Kursanzeiger eine Information, wohin er das Gerät vor Pflanzbeginn bringen muss, d.h. wo sich der Bezugspunkt befindet. Die Abweichung der Position des Pflanzgeräts wird dem Geräteführer über den Kursanzeiger mitgeteilt, damit er das Gerät in eine entsprechende Ausgangsposition bringen kann. Die zur Verwirklichung der vorstehenden Aufgaben erforderlichen Datenverarbeitungsprogramme sind entweder bekennt oder sie können bei Vorgabe der Aufgabe jeweils mit handwerklichen Mitteln der Programmiertechnik geschaffen werden und sind nicht Gegenstand der Erfindung.

Es ist ein Vorteil, dass die mobile Antenne auf der erfindungsgemäßen Vorrichtung an unterschiedlichen Stellen angeordnet werden kann, ohne dass die Genauigkeit der Pflanzarbeit leidet, vorausgesetzt, dass sie innerhalb eines individuellen Einsatzes immer an derselben Stelle angeordnet ist. Dies beruht auf der Tatsache, dass das Gerät vor jedem Einsatz geeicht, d.h. auf den erwähnten Bezugspunkt eingestellt wird.

Geeignet ist insbesondere die Anordnung in der Maschinenmitte, d.h. in Querrichtung vertikal über der Pflanzlinie. Ebenfalls geeignet ist eine Anordnung außerhalb der Maschinenmitte, d.h. auf einer Seite neben der Pflanzlinie Die "mittige" Lösung ist die einfachere, jedoch kann eine andere Anordnung aus konstruktiven Gründen zweckmäßig sein. Da ein Pflanzfeld sowohl in Querrichtung als auch in Längsrichtung geneigt sein kann, sollte bei besonders hohen Anforderungen an die Genauigkeit die Antenne lageunabhängig vom Gerät angeordnet oder für kurzzeitige Bewegungen eine Korrekturfunktion vorgesehen werden.

Die erfindungsgemäße Vorrichtung kann zur gleichzeitigen Bepflanzung mehrerer Reihen eingerichtet werden. Soll in diesem Fall in beiden Richtungen gepflanzt ("Schleifen gefahren") werden, so müssen die Abstände zwischen den Schleifen immer ein ganzes Vielfaches der Reihenanzahl der Maschine sein. Die zweireihige Maschine wird versetzt gefahren, d.h. sie wird seitlich verschoben, so dass sich eine Reihe innerhalb der Fahrspur und eine Reihe außerhalb der Fahrspur befindet. Die Reihe innerhalb der Fahrspur ist dabei nicht in der Traktormitte.

Eine besonders vorteilhafte Einsatzmöglichkeit der Erfindung ist das Anlegen von Pflanzungen auf Flächen, die zwar gradlinig begrenzt sind, jedoch von der Rechteckform abweichen. Manche Feldflächen haben z.B. Trapezform. Um zu vermeiden, dass bei dieser Feldform Reihen an der "schrägen" Seite auslaufen, kann es vorteilhaft sein, ein Steuerprogramm einzurichten, das vorsieht, dass sich der Reihenabstand vom Beginn zum Ende des Felds hin vergrößert oder verengt, d.h. die Reihen im Prinzip fächerförmig verlaufen. Die Mindermenge an Pflanzen, die auf diese Weise auf einer gegebenen Fläche untergebracht werden können, ist im Allgemeinen so gering, dass der Zeitgewinn bei der späteren Bearbeitung (Bodenbearbeitung, Laubschnitt, Ernte) dies aufwiegt.

## Patentansprüche

1. Selbstfahrende oder zum Anbau an die Dreipunkt-Kupplung eines Ackerschleppers mittels eines Anbaurahmens geeignete Vorrichtung zum Anlegen von Reihenpflanzungen, mit (vgl. Fig. 1) einem Hauptrahmen (3), mindestens einer nach hinten offenen, keilförmigen Schar (2) zum Ausheben eines Pflanzgrabens, die fest mit dem Anbaurahmen (1) oder dem Hauptrahmen (3) verbunden oder so angeordnet ist, dass sie abgesenkt werden kann, wobei die Vorrichtung mindestens aufweist:
- eine innerhalb des Hauptrahmens (3) angeordnete mechanische Pflanzvorrichtung (4) zum Erfassen und selbsttätigen Einbringen von Setzlingen in den Pflanzgraben, die ein innerhalb des Hauptrahmens (3) angeordnetes, um eine Achse quer zur Fortbewegungsrichtung geschwindigkeitsgesteuert drehbares, in die Schar (2) teilweise eintauchendes Pflanz- oder Greiferrad (4) aufweist,
- übliche Elemente wie Sitze für das Bedienungspersonal, Vorratskrippen zur Aufnahme des Pflanzguts, Mittel zum Antrieb und zur Anpassung der Arbeitsgeschwindigkeit der Pflanzvorrichtung an die tatsächliche Fortbewegungsgeschwindigkeit der Vorrichtung auf der Ackerfläche, sowie Mittel zum Wiederverschließen des Pflanzgrabens,
**dadurch gekennzeichnet, dass**
- eine Einrichtung vorhanden ist, mit der die Ortskoordinaten der Pflanzvorrichtung in an sich bekannter Weise durch Auswertung der Peilung eines mitgeführten Empfängers (45) für Navigationssignale eines Satellitensystems (41) ("Satellitenortungssystem") mittels eines Rechners ständig festgestellt werden, wobei ein ortsfester zweiter Satellitenempfänger (46) mit Funkverbindung zum mitgeführten Empfänger (45) vorgesehen ist, die Ortskoordinaten der Pflanzvorrichtung mittels Differentialverfahren ermittelt werden und über mindestens eine Schnittstelle (48a, 48b) des Rechners zur Steuerung der Arbeitsgeschwindigkeit der Pflanzvorrichtung und des Orts der Pflanzung genutzt werden,
- dass eine kontinuierlich arbeitende Messeinrichtung für die Fahrgeschwindigkeit in Gestalt eines Sensorrads mit Bodenkontakt, eines Laser-, eines Infrarotgeräts oder einer Abtasteinrichtung für einen Messdraht vorhanden ist, deren Signale dem Rechner aufgeschaltet werden können,
- dass zur Ermittlung der maßgeblichen Geschwindigkeit zwischen zwei Satellitenmessungen die aus drei oder mehr vorausgehenden Satellitenmessungen gewonnene mittlere Geschwindigkeit und/oder das Signal der kontinuierlich arbeitenden Messeinrichtung als Korrekturgröße verwendet wird.

2. Vorrichtung nach Anspruch 1, **dadurch gekennzeichnet, dass** das Pflanzrad **(4)** mit ungleichförminger Drehgeschwindigkeit betrieben wird, derart, dass zu einer gegebenen Zeit vor dem Erreichen des Pflanzpunkts das Rad **(4)** gestartet und beim Erreichen des Pflanzpunkts dessen Greifer geöffnet werden.

3. Vorrichtung nach Anspruch 1, **dadurch gekennzeichnet, dass** der Hauptrahmen (3) mit einer Einrichtung zum Neigungsausgleich ausgestattet ist, derart, dass der Hauptrahmen (3) auch dann waagerecht gehalten werden kann, wenn die Maschine als Ganzes während der Fahrt über hängiges Gelände geneigt wird.

4. Vorrichtung nach Anspruch 3, **dadurch gekennzeichnet, dass** der Hauptrahmen **(3)** mit dem Anbaurahmen drehgelenkig verbunden und ein Sensor **(42)** zur Ermittlung von Lageabweichungen des Hauptrahmens **(3)** von der Wagrechten vorhanden ist, wobei die zentrale Steuerung der Maschine mit mindestens einer Schnittstelle **(50a)** ausgestattet ist, mit der über eine Servoeinrichtung eine festgestellte Seitenneigung ausgeglichen, sowie gegebenenfalls der als Kurs-Anzeiger gestaltete Monitor angesteuert werden kann, derart, dass eine seitliche Abweichung des Arbeitszentrums von der Pflanzlinie selbsttätig oder vom Maschinenführer ausgeglichen werden kann.

5. Vorrichtung nach Anspruch 1, **dadurch gekennzeichnet, dass** der Hauptrahmen **(3)** gegenüber dem Anbaurahmen **(1)** in Seitenrichtung auslenkbar ist.

6. Vorrichtung nach Anspruch 1, **dadurch gekennzeichnet, dass** ein Sensor **(43)** vorhanden ist, aus dessen Signal die jeweilige Abweichung der Hochachse von der lotrechten Richtung in Längsrichtung festgestellt und daraus eine Stellgröße zur Veränderung der Steuerung der Greifer **(4a)** des Pflanzrads **(4)** gebildet wird.

7. Vorrichtung nach einem der Ansprüche 1 bis 6, **dadurch gekennzeichnet, dass** ein Speicher vorhanden ist, in dem die Ortskoordinaten der Einzelpflanzen und/oder deren relative Zuordnung festgehalten werden können.

8. Verfahren zur Steuerung einer vorzugsweise mittels eines Anbaurahmens an die Dreipunkt-Anbauvorrichtung eines Ackerschleppers anbaubaren Maschine zum reihenweisen Einbringen von Setzlingen in regelmäßigen Abständen in die Erde, nach Anspruch 1, die einen mit dem Anbaurahmen **(1)** verbundenen Hauptrahmen **(3)** und eine innerhalb des Hauptrahmens **(3)** angeordnete mechanische Pflanzvorrichtung ***(4)*** in Gestalt eines Pflanz- oder Greiferrads **(4)** zum Erfassen und selbstätigen Einbringen von Setzlingen in einen zuvor mittels einer an der Maschine vorhandenen Schar **(2)** geöffneten Pflanzgraben aufweist,
**dadurch gekennzeichnet, dass**
- die Ortskoordinaten der Pflanzvorrichtung bzw. der einzubringenden Setzlinge in an sich bekannter Weise durch Auswertung der Peilung eines mitgeführten Empfängers **(45)** für Navigationssignale eines Satellitenortungssystems **(41)** mittels eines Rechners ständig festgestellt und über mindestens eine Schnittstelle des Rechners zur Steuerung der Arbeitsgeschwindigkeit und -richtung der Pflanzvorrichtung und des Orts der Pflanzung genutzt werden, ein ortsfester zweiter Satellitenempfänger **(46)** mit Funkverbindung zum mitgeführten Empfänger **(45)** vorgesehen ist und die Ortskoordinaten der Pflanzvorrichtung mittels Differentialverfahren präzisiert werden,
- das Pflanzrad **(4)** mit ungleichförminger Drehgeschwindigkeit betrieben wird, derart, dass zu einer gegebenen Zeit vor dem Erreichen des Pflanzpunkts das Rad **(4)** gestartet und beim Erreichen des Pflanzpunkts dessen Greifer geöffnet werden,
- dass der Hauptrahmen **(3)** gegenüber dem Anbaurahmen **(1)** in Seitenrichtung auslenkbar ist,
- zur Ermittlung der maßgeblichen Geschwindigkeit zwischen zwei Satellitenmessungen die aus drei oder mehr vorausgehenden Satellitenmessungen gewonnene mittlere Geschwindigkeit und/oder das Signal der kontinuierlich arbeitenden Messeinrichtung als Korrekturgröße verwendet wird,
- und dass eine Messeinrichtung für die Fahrgeschwindigkeit in Gestalt eines Sensorrads mit Bodenkontakt, eines Laser-, eines Infrarotgeräts oder einer Abtasteinrichtung für einen Messdraht vorgesehen ist, deren Signale dem Rechner aufgeschaltet werden.

9. Verfahren nach Anspruch 8, **dadurch gekennzeichnet, dass** zur Ermittlung der maßgeblichen Geschwindigkeit zwischen zwei Satellitenmessungen die aus drei oder mehr vorausgehenden Satellitenmessungen gewonnene mittlere Geschwindigkeit und/oder das Signal der kontinuierlich arbeitenden Messeinrichtung als Korrekturgröße verwendet wird.

## Claims

1. Automobile device or device suitable for mounting to the three-point coupling of an agricultural tractor using an attachable frame for creating line plantations with (cf. fig. 1) a main frame (3), at least one wedge-shaped share (2) open at the backside for cutting of a plant ditch, that is permanently connected to the attachable frame (1) or the main frame (3) or arranged in such a way that the device can be lowered, whereby the device is at least **characterised by**:
- a mechanical planting device (4) situated in the main frame (3) for collecting and placing of seedlings in the plant ditch equipped with a speed-controlled planting or clamp wheel (4) partly dipping in the share (2) situated in the main frame (3) and rotating around an axis aligned diagonally to the movement direction,
- common elements such as seats for the operators, supply containers for gathering the seed stock, means for driving and adjusting the working speed of the planting device to the actual moving speed of the device on the agricultural crop land as well as means for re-sealing the plant ditch,
**characterised by** the fact that
- it consists of a device for permanently determining the position coordinates of the planting device in an actually known fashion by evaluation of the location of an attached receiver (45) for the navigation signals of a satellite system (41) ("satellite locating system") by means of a computer, whereby a second stationary satellite receiver (46) with radio communication to the attached receiver (45) is intended, the position coordinates of the planting device are determined by means of the differential method and are used with at least one interface (48a, 48b) of the computer for controlling the working speed of the planting device and the position of the planting,
- it consists of a continuously working measuring device for the driving speed, whose signals can be transferred to the computer, in the form of a sensor wheel with floor contact, a laser device, an infrared device or a scanning device for a measuring wire,
- the medium speed derived from three or more prior satellite measurements and/or the signal from the continuously working measuring device is used as adjustment value in order to determine the relevant speed between two satellite measurements.

2. Device according to claim 1 **characterised by** the fact that the planting wheel is operated with an irregular rotating speed in such a way that the wheel is started at a defined time prior to reaching the planting point and that its clamshells are opened at reaching the planting point.

3. Device according to claim 1 **characterised by** the fact that the main frame (3) is equipped with a device for balancing inclined surfaces in such a way that the main frame (3) remains in a horizontal position, even if the entire machine is moving over sloping territory during the ride.

4. Device according to claim 3 **characterised by** the fact that the main frame is connected to the attachable frame by means of a swivel joint and is equipped with a sensor for determining position deviations of the main frame from the horizontal line, whereby the central control of the machine is equipped with at least one interface, with the help of which a determined lateral inclination can be balanced by a servo device as well as with a monitor possibly designed as a course display can be controlled in such a way that a lateral deviation from the working centre of the planting line can be adjusted automatically or by the machine operator.

5. Device according to claim 1 **characterised by** the fact that the main frame can be moved in lateral direction with regard to the attachable frame.

6. Device according to claim 1 **characterised by** the fact that it is equipped with a sensor, whose signal can be used to determine the respective deviation of the vertical axis from the lengthwise vertical direction and from which a set value for the modification of the control of the clamshells (4a) of the planting wheel is formed.

7. Device according to one of the claims 1 to 6 **characterised by** the fact that it is equipped with a memory in which the position coordinates of the individual plants and/or their relative allocation can be stored.

8. Method for controlling a machine preferably connected to the three-point attachment device of an agricultural tractor by means of an attachable frame for planting seedlings into the earth in a line in regular intervals, equipped with a main frame connected to the attachable frame and a mechanic planting device situated in the main frame in the form of a planting or clamp wheel for collecting and independently placing of seedlings in a plant ditch opened before by a share attached to the machine, **characterised by** the fact that
- the position coordinates of the planting device and/or the seedlings being planted are permanently determined in an actually known fashion by evaluation of the location of an attached receiver for the navigation signals of a satellite locating system by means of a computer and at least one interface of the computer is used for controlling the working speed and direction of the planting device and the position of the planting, a stationary second satellite receiver with radio communication to the attached receiver is intended and the position coordinates of the planting device are specified by means of the differential method,
- the planting wheel is operated with an irregular rotating speed in such a way that the wheel is started at a defined time prior to reaching the planting point and that its clamshells are opened at reaching the planting point,
- the main frame can be moved in lateral direction with regard to the attachable frame,
- the medium speed derived from three or more prior satellite measurements and/or the signal from the continuously working measuring device is used as adjustment value in order to determine the relevant speed between two satellite measurements,
- it also consists of a measuring device for the driving speed, whose signals can be transferred to the computer, in the form of a sensor wheel with floor contact, a laser device, an infrared device or a scanning device for a measuring wire.

9. Method according to claim 8 **characterised by** the fact that the medium speed derived from three or more prior satellite measurements and/or the signal from the continuously working measuring device is used as adjustment value in order to determine the relevant speed between two satellite measurements.

## Revendications

1. Dispositif automoteur ou convenant pour montage sur l'attelage trois points d'un tracteur agricole, au moyen d'un cadre de montage, pour effectuer des plantations en rangées, avec (voir figure 1) un cadre principal (3), au moins un soc (2) en forme de coin, ouvert en direction de l'arrière, pour créer un sillon de plantation, fixé au cadre d' attelage (1) ou au cadre principal (3) ou disposé de manière à pouvoir être abaissé, le dispositif présentant au moins :
- un dispositif de plantation (4) mécanique, disposé à l'intérieur du cadre principal (3), pour saisir et automatiquement introduire des plants dans le sillon de plantation, le dispositif de plantation présentant une roue de plantation ou à preneurs (4), disposée à l'intérieur du cadre principal (3), se déplaçant en tournant en étant soumise à une commande de la vitesse, autour d'un axe, transversalement à la direction de travail, et plongeant partiellement dans le soc,
- des éléments usuels, tels que des sièges, pour le personnel de service, des clayettes de stockage pour recevoir le produit à planter, des moyens pour l'entraînement et pour l'adaptation de la vitesse de travail du dispositif de plantation à la vitesse de progression effective du dispositif sur la surface du champ, ainsi que des moyens de refermeture de la tranchée de plantation,
**caractérisé en ce qu'**
- est prévu un dispositif, à l'aide duquel les coordonnées locales du dispositif de plantation sont déterminés en permanence, de manière connue en soi, au moyen d'un ordinateur, par évaluation du relèvement d'un récepteur (45) de bord, pour des signaux de navigation d'un système à satellites (41) (« système de localisation par satellites »), sachant qu'un deuxième récepteur satellite (46) localement fixe est prévu, avec une liaison radio vers le récepteur (45) emmené pour le travail, les coordonnées locales du dispositif de plantation étant déterminées par un dispositif différentiel et étant utilisées, par l'intermédiaire d'au moins une interface (48a, 48b) de l'ordinateur, pour la commande de la vitesse de travail du dispositif de plantation et du site de plantation,
- **en ce qu'**un dispositif de mesure, travaillant en continu, pour appréhender la vitesse de conduite, réalisé sous la forme d'une roue à capteurs ayant un contact avec le sol, d'un appareil à laser, d'un appareil à infrarouge, ou d'un appareil de palpage pour un fil de mesure, est prévu, dont les signaux peuvent être communiqués à l'ordinateur,
- **en ce que**, pour déterminer la vitesse voulue entre deux mesures par satellite, on utilise la vitesse moyenne, obtenue à partir de trois mesures par satellite précédentes ou plus, et/ou le signal du dispositif de mesure travaillant en continu, en tant que mesure de correction.

2. Dispositif selon la revendication 1, **caractérisé en ce que** la roue de plantation est actionnée avec une vitesse de rotation irrégulière, de manière qu' à un moment donné, avant l'atteinte du point de plantation, la roue soit mise en mouvement et que son preneur soit ouvert à l'atteinte du point de plantation.

3. Dispositif selon la revendication 1, **caractérisé en ce que** le châssis principal (3) est équipé d'un dispositif pour la compensation de l'inclinaison, **en ce que** le châssis principal (3) peut également ensuite être maintenu horizontal, lorsque la machine est en totalité inclinée pendant le travail sur un terrain pentu.

4. Dispositif selon la revendication 3, **caractérisé en ce que** le cadre principal est relié de façon articulée en rotation au cadre de montage, et un capteur, servant à déterminer des écarts de position du cadre principal par rapport à l'horizontal, est prévu, la commande centrale de la machine est équipée d'au moins une interface, à l'aide de laquelle, par l'intermédiaire d'un dispositif d'asservissement, une inclinaison sur le côté, ayant été détectée, est compensée, et, le cas échéant, le moniteur, configuré en afficheur de cap, peut être commandé, de manière qu'un écart latéral du centre de travail par rapport à la ligne de plantation puisse être compensé, automatiquement ou bien par le conducteur de la machine.

5. Dispositif selon la revendication 1, **caractérisé en ce que** le châssis principal est susceptible d'effectuer une manoeuvre latérale par rapport au châssis d'attelage.

6. Dispositif selon la revendication 1, **caractérisé en ce qu'**est prévu un capteur, à partir du signal duquel est déterminé l'écart respectif de l'axe vertical par rapport à la direction d'aplomb, en direction longitudinale et, à partir de cela, une grandeur de réglage est formée, pour modifier la commande des preneurs (4a) de la roue de plantation.

7. Dispositif selon l'une des revendications 1 à 6, **caractérisé en ce qu'**est prévue une mémoire, dans laquelle peuvent être placées les coordonnées locales des plantations individuelles et/ou leur association relative.

8. Procédé de commande d'une machine, susceptible d'être montée, de préférence au moyen d'un cadre de montage, sur le dispositif de montage trois points d'un tracteur agricole, pour le placement en rangs de plants selon des espacements réguliers dans la terre, machine présentant un cadre principal, relié au cadre de montage, et un dispositif de plantation mécanique, disposé à l'intérieur du cadre principal, réalisé sous la forme d'une roue de plantation ou à preneurs, pour saisir et introduire automatiquement des plants dans un sillon de plantation, ouvert préalablement au moyen d'un soc prévu sur la machine,
**caractérisé en ce que**
- les coordonnées locales du dispositif de plantation ou des plants à introduire sont fixées en continu au moyen d'un ordinateur, de manière connue en soi, par évaluation du relèvement d'un récepteur embarqué, pour des signaux de navigation d'un système de localisation par satellite, et sont utilisées, par l'intermédiaire d'au moins une interface de l'ordinateur, pour la commande de la vitesse et de la direction de travail du dispositif de plantation et du lieu de plantation, un deuxième récepteur satellite localement fixe, ayant une liaison radio vers le récepteur embarqué, étant prévu, et les coordonnées locales du dispositif de plantation étant précisées par un procédé différentiel,
- la roue de plantation est actionnée à une vitesse de rotation irrégulière, de manière que, à un moment donné, avant l'atteinte du point de plantation, la roue soit mise en mouvement et que son preneur soit ouvert à l'atteinte du point de plantation,
- **en ce que** le châssis principal peut effectuer une manoeuvre en direction latérale par rapport au châssis d'attelage,
- pour la détermination de la vitesse choisie, entre deux mesures par satellite, on utilise la vitesse moyenne, obtenue à partir de trois mesures par satellite précédentes ou plus, et/ou le signal du dispositif de mesure travaillant en continu, en tant que grandeur de correction,
- et **en ce qu'**un dispositif de mesure est prévu pour appréhender la vitesse de conduite, dispositif réalisé sous la forme d'une roue de capteur ayant un contact avec le sol, d'un appareil laser, d'un appareil à infrarouge, ou d'un dispositif de palpage pour un fil de mesure, dont les signaux sont communiqués à l'ordinateur.

9. Procédé selon la revendication 8, **caractérisé en ce que**, pour déterminer la vitesse choisie entre deux mesures par satellite, on utilise la vitesse moyenne, obtenue à partir de trois mesures par satellite précédentes ou plus, et/ou le signal du dispositif travaillant en continu, en tant que grandeur de correction.
